# EUROPÄISCHE PATENTANMELDUNG

(11) **EP 2 491 783 A2**
(43) Veröffentlichungstag der Anmeldung: **29.08.2012**
(21) Anmeldenummer: 12156527.9
(22) Anmeldetag: 22.02.2012
(51) Int. Cl.: A01G 1/00

(54) **Verfahren zur modularen Gestaltung von Freiflächen**

(30) Priorität: 22.02.2011 DE 102011011977
(71) Anmelder: Bockel, Christina, 23701 Eutin (DE)
(72) Erfinder: Bockel, Christina, 23701 Eutin (DE)
(74) Vertreter: Harbsmeier, Jörn Felix

(57) **Zusammenfassung**

Dargestellt und beschrieben ist ein Verfahren zur modularen Gestaltung von Freiflächen, wobei die Freiflächen mit Pflanzen oder Baustoff- und Dekorationselementen bestückt werden. Die Aufgabe, die Gestaltung von Freiflächen zu vereinfachen und wirtschaftlich günstiger zu machen, ohne dabei die Wahlfreiheit wesentlich einzuschränken, wird dadurch gelöst, dass das Verfahren die folgenden Schritte aufweist: Auswählen eines oder mehrerer Module aus einer Modulgruppe, wobei für jedes Modul aus der Modulgruppe festgelegt ist, welche Pflanzen und/oder Baustoff- und Dekorationselemente auf einem Bodensubstratelement in welcher Weise räumlich angeordnet sind; Zusammenfügen der ausgewählten Module durch Zusammenfügen der Pflanzen und/oder Baustoff- und Dekorationselemente mit dem Bodensubstratelement gemäß der vorgegebenen räumlichen Anordnung, wobei das Zusammenfügen an einem Ort durchgeführt werden kann, der nicht identisch mit der Freifläche und nicht in unmittelbarer Nähe der Freifläche ist, und wobei die zusammengefügten Module mittels eines Transportsystems zu den Freiflächen verbracht und auf der Freifläche angeordnet werden können.

## Beschreibung

Die vorliegende Erfindung betrifft ein Verfahren zur modularen Gestaltung von Freiflächen, wobei die Freiflächen mit Pflanzen und/oder Baustoff- und Dekorationselementen bestückt werden.

Die vorliegende Erfindung hat es sich zur Aufgabe gestellt, den Anspruch von Kunden auf Individualität bei der Gestaltung von Freiflächen, sowohl im Innen- als auch im Außenbereich, durch ein System aus fabrikmäßigem Leistungsangebot, Herstellung, Lieferung und Installation derart zu vereinfachen, dass binnen kürzester Zeit ein vollumfänglich nutzbares Endprodukt beim Kunden etabliert ist. Dabei soll die Wirtschaftlichkeit der Grünzonengestaltung sowohl für den Anbieter als auch für den Kunden ein signifikantes Einsparungspotenzial erbringen und langwierige kostenintensive Angebotserstellungen, aufwändige Planungsvorgänge, kostenintensive Einzelstückbeschaffung, personalintensive Bepflanzung, und es sollen vor allem lange Wartezeiten vor der Nutzung durch den Kunden durch Anwachsschonzeiten vermieden werden.

Die Gestaltung von Freiflächen, sowohl privater als auch geschäftlicher, nimmt einen immer wichtigeren Stellenwert in unserer Gesellschaft ein. Das resultiert aus immer weniger Freizeit bei gleichzeitig steigendem Leistungsdruck. Gleichzeitig hat sich die verfügbare Freifläche in den letzten Jahrzehnten erheblich eingeschränkt. Während früher zum Beispiel der Gartenbereich eines Einfamilienhauses / Reihenhauses meist über 300-500 m² lag, sind heute Gärten mit selbst weniger als 100 m² absolut keine Seltenheit mehr. Weiterhin hat sich das Verhältnis von verbleibendem Einkommen eher hin zur Deckung der Grundbedürfnisse entwickelt als in die Freizeitgestaltung. Nachdem demgegenüber die herstellenden Betriebe von Pflanzen und Pflanzanlagen einem erhöhten nationalen und internationalen Konkurrenzdruck unterworfen sind und dabei für die immer noch überwiegend manuelle Installation und Nachsorge vor Ort einen hohen Personalstand zur Leistungserbringung halten müssen, steigen dort die Betriebskosten dramatisch an. Im Wandel des Verbraucherverhaltens wird jetzt auch hier der direkte Leistungsvergleich bei einem Produkt gefordert, verbunden mit einem hohen Maß an Individualität, niedrigem und risikoarmen Kostenaufwand bei maximalem Gewährleistungsanspruch, sowie schneller Verfügbarkeit und kurzfristige Ausführung. Diese Faktoren machen es einem herstellenden Betrieb für Bepflanzungen heute sehr schwer, mit einem überschaubaren Kostenrisiko umfängliche Individualität anbieten und leisten zu können. Insbesondere der hohe Abhängigkeitsgrad des Leistungserbringers von Bauherren oder Betreibern zusätzlich zu den umweltbedingten Abhängigkeiten der Bodenbeschaffenheit und Witterung, führt zunehmend zur Degradation des Gärtnerwesens zum Pflanzenhandel mit eingeschränktem Dienstleistungsumfang.

Das Erfordernis des Wandels vom Gärtnerwesen zum Projektmanagement mit Qualitätsmanagement und Qualitätssicherung, von der Einzelfertigung zur industriellen Vorfertigung oder zur Manufaktur, und der Systematisierung vom Angebot zur Herstellung, Lieferung und Gewährleistung, jeweils unter Berücksichtigung und Integration individueller Parameter und Besonderheiten sind eine weitere Aufgabenstellung. Die konventionell praktizierte Gestaltungsausführung von Beratung, Ortsbesichtigung, Angebot, Einzelbestellung und Lieferung und umfangreicher Montage vor Ort führt zu sehr hohen Betriebskosten, hohen Mengen an Minderbestellmengen mit entsprechendem Kostenaufwand und vor allem langen und personalintensiven Einsatzzeiten vor Ort bei der eigentlichen Pflanzung. Die Systematisierung der Ausführung mit weitestgehender Vorfertigung soll hier Abhilfe schaffen und so die Wirtschaftlichkeit erhöhen und die Ausführungszeiten reduzieren bei gleichzeitiger Minimierung von Restmengen an Material. Auch die Fokussierung der Gestaltungsmerkmale auf Themenkreise soll gemäß der Erfindung einen Teil zur Erhöhung der Wirtschaftlichkeit beitragen.

Aus dem Stand der Technik ist bisher die Herstellung und Verwendung von Rollrasen, wie er teilweise bei Sportanlagen oder aber auch bei der Gartengestaltung eingesetzt wird, bekannt. Diese Monokultur beansprucht aber keinesfalls den Anspruch auf individuelle Gestaltungsmerkmale oder multiple Bepflanzung und Wirksamkeitszusammenführung. Hier finden sich fest mit dem Untergrund verwachsende Rasenrollen und solche, welche in Sportanlagen temporär demontiert werden können.

Ausgehend vom Stand der Technik ist es daher die Aufgabe der vorliegenden Erfindung, die Gestaltung von Freiflächen zu vereinfachen und wirtschaftlich günstiger zu machen, ohne dabei die Wahlfreiheit wesentlich einzuschränken.

Diese Aufgabe wird durch ein Verfahren gemäß Anspruch 1 gelöst. Das erfindungsgemäße Verfahren kann folgende Schritte aufweisen:
Auswählen eines oder mehrerer Module aus einer Modulgruppe, wobei für jedes Modul aus der Modulgruppe festgelegt ist, welche Pflanzen und/oder Baustoff- und Dekorationselemente auf einem Bodensubstratelement in welcher Weise räumlich angeordnet sind;
Zusammenfügen der ausgewählten Module durch Zusammenfügen der Pflanzen und/oder Baustoff- und Dekorationselemente mit dem Bodensubstrat gemäß der vorgegebenen räumlichen Anordnung, wobei das Zusammenfügen in einer bevorzugten Ausführungsform an einem Ort durchgeführt wird, der nicht identisch mit der Freifläche und nicht in unmittelbarer Nähe der Freifläche ist, wobei in weiter bevorzugter Weise das Verbringen der zusammengefügten Module mittels eines Transportsystems zu den Freiflächen erfolgt, und

Anordnen der zusammengefügten Module auf der Freifläche.

Der Begriff "Freiflächen" im Sinne der vorliegenden Erfindung umfasst jede Art von Bodenfläche, die mit Pflanzen bepflanzt werden kann, wie beispielsweise Gartenbereiche, Abschnitte von Grünanlagen oder dgl.

In diesem Zusammenhang wird unter dem Begriff "Pflanzen" jegliche Art von Pflanzen verstanden, die bei der Bepflanzung von Freiflächen zum Einsatz kommen können. Schließlich wird unter dem Begriff "Baustoff- und Dekorationselement" jegliche Form von Element verstanden, die zusammen mit Pflanzen beispielsweise in einem Garten angeordnet werden. Hierbei kann es sich um Steine, Keramikelemente, Holzteile oder Behälter für kleine Teiche handeln, wobei auch dies keine abschließende Aufzählung ist.

Durch das Festlegen einer Gruppe von vorgegebenen Modulen können diese thematisch und inhaltlich derart systematisiert werden, dass eine vollumfängliche Angebotsdarstellung mit Ausführungsplan und Stückliste, gegebenenfalls auch mit der visuellen Darstellung des prognostizierten Ergebnisses zwei-und/oder dreidimensional im Lieferzustand und gegebenenfalls sogar in den Wachstumsphasen oder auch zu den unterschiedlichen Jahreszeiten, möglich ist, ohne dass der Zeitaufwand bei der Vor- und Planung und Angebotserstellung die kostenunproportionale Bindung von qualifiziertem Personal beansprucht.

Mittels erfindungsgemäßen Verfahrens ist es möglich, die Ausführungen derart zu steuern, dass es möglich ist, die Module quasindustriell vorzufertigen und in unterschiedlichen Aus-und Aufbaustadien in einem Montagesystem auszuliefern. Die methodische Vorfertigung erlaubt es des Weiteren, den Aufbau vor Ort durch angelernte Mitarbeiter mit standardisiertem Werkzeug und Gerät durchzuführen, da für den Aufbau nur geringe gärtnerischen Fähigkeiten vorhanden sein müssen.

Die Module können in unterschiedlichen Grundgrößen vorgesehen werden und thematisch nach ihren Einsatzorten und Zwecken kategorisiert werden. Dabei definiert sich die Preisgestaltung über die Modulgrundfläche zusammen mit den Pflanzenarten, der Pflanzendichte, der Anzahl und Menge an Baustoff- und Dekorationselementen und dem Ausbaugrad.

Durch die Systematisierung bei Herstellung, Lieferung und Montage können bereits bei der Angebotserstellung die effektiven Kosten direkt abgelesen werden und so das Kostenrisiko für Ersteller und Abnehmer im Vorfeld auf ein Minimum reduziert werden. Gleichzeitig ist es durch die Modularität der Bepflanzungsmodule möglich, diese untereinander zu kombinieren und somit an die geo- und topographischen Gegebenheiten des Anwendungsortes bei minimalem Materialaufwandrisiko festzulegen.

Ein weiterer Aspekt ist es, dem Verbraucher eine Auswahlhilfe dahingehend zur Verfügung zu stellen, dass dieser mittels Themenfelder schneller und sicherer in seiner Entscheidungsfindung gelenkt wird, und so der reduzierte gegenseitige Aufwand den Kosten-Nutzen Faktor bei der Ausführung maximiert.

Durch die quasi-industrielle Bepflanzungstechnik ist es erfindungsgemäß möglich, die einzelnen Module derart bevorratend vorzufertigen, dass diese in ihrem Grundaufbau fertig gestellt werden können und lediglich die Elementbestückung nach Themenwahl zur Komplettierung der Grundmodule vorgenommen werden muss. Dadurch sind exakte Liefertermine vorhersehbar und die Montagezeiten sind exakt minimiert vorgebbar. Anders als bei konventionell gestalteten Bepflanzungsflächen ist die Montage weitestgehend witterungsunabhängig und kann zu jeder Tages-und Nachtzeit erfolgen.

Erfindungsgemäß ist durch die jetzt gegebene Möglichkeit der Vorfertigung der Module die Jahreszeitabhängigkeit von Bepflanzungen reduziert, da durch die modulare Vorfertigung saisonale Pflanzbegrenzungen aufgehoben sind und damit die wirksame Angebots- und Ausführungszeit signifikant erweitert wird. In der Folge steigt die Wirtschaftlichkeit der Modulfertigung, insbesondere durch die verlängerte saisonunabhängige Montagemöglichkeit. Die Größe der Module wird weitestgehend nur durch die Transportbreite von der Vorfertigung zum Montageort bestimmt. Die Liefergrößen definieren sich nach dem Ausbaugrad der Module und können von der Ein-Mann-Abmessung - d.h. nach den allgemein gültigen Unfallverhütungsvorschriften maximal 25 kg - bis hin zu maschineninstallierten Modulen mit mehreren Tonnen ausgelegt sein.

Eine andere erfindungsgemäße Dimensionierung ist beispielsweise 1/1 Modul mit 6 m *6 m, ½ Modul mit 3 m * 3 m, ¼ Modul mit 1,5 m * 1,5 m in quadratischer Auslegung, oder aber mit ungleichen Seiten zu Längenverhältnissen, in Sonderausführungsformen auch kreisförmig, elliptisch und unregelmäßig geformt.

Neben den Pflanzen für die Module wird bei dem erfindungsgemäßen Verfahren auch eine Vielzahl von Baustoff- und Dekorationselemente nichtpflanzlichen Ursprungs berücksichtigt. Neben verschiedenen Gesteinen in unterschiedlichsten Körnungen bis hin zu Formsteinen natürlichen oder synthetischen Ursprungs kann als ein beispielhafter Formstein ein Hohlstein verwendet werden, der als Einfassung dient mit der Besonderheit, dass er gleichzeitig die Funktion eines Funktionskanals bildet, d.h. in seinem Inneren ist sowohl die Bewässerungsleitung integriert und z.b. elektrisch abgeschottet eine Stromversorgung, vorzugsweise Niedervolt, für Beleuchtungs- oder andere elektrische Funktionselemente. Weitere Baustoff- und Dekorationselemente oder Versorgungsmittel sind dabei im Modul integrierte Drainagen, Bewässerungen, Entwässerungen, Stabilitätselemente für Aufbauten, Klangkörper zur Schädlingsbekämpfung und viele weitere.

In bevorzugter Weise weisen die Module aus der Modulgruppe freigehaltene Einsatzplätze in dem Bodensubstratelement auf, wobei eine Zusatzgruppe von Pflanzen und/oder Baustoff- und Dekorationselementen vorgesehen ist, die in ihrer Form den freigehaltenen Einsatzplätzen entsprechen, und wobei beim Schritt des Auswählens des oder der Module aus der Modulgruppe eines oder mehrer der Pflanzen und/oder Baustoff- und Dekorationselemente aus der Zusatzgruppe ausgewählt wird und wobei beim Annordnen der Module in der Freifläche die ausgewählten Pflanzen und/oder Baustoff- und Dekorationselemente aus der Zusatzgruppe in die Einsatzplätze der Module entsprechend der Auswahl eingesetzt werden.

Durch diese zusätzliche Möglichkeit können die Module in begrenzten Umfang in der Weise individualisiert werden, dass weitere Baustoff- und Dekorationselemente und/oder Pflanzen in die vorgegebenen Einsatzplätze eingesetzt werden, wobei es sich hierbei insbesondere um solche Pflanzen oder Baustoff-und Dekorationselemente handeln kann, die sich nicht zusammen mit dem fertig zusammengefügten Modulen transportieren lassen. Hierbei kann es sich beispielsweise um große Bäume oder dgl. handeln.

Des Weiteren ist es bevorzugt, wenn die Module aus der Modulgruppe an vorgegebenen Positionen Versorgungsmittel, insbesondere Wasser- und Stromleitungen mit Anschlusselementen an den Seitenflächen des Bodensubstratelements aufweisen, über die Versorgungsmittel weiterer Module oder externe Versorgungsmittel angeschlossen werden können, und wobei während des Schrittes des Zusammenfügens die Versorgungsmittel in dem Bodensubstratelement der ausgewählten Module angeordnet werden. Auf diese Weise kann bereits während des Zusammenfügens, also beispielsweise in Gartenbaubetrieb, die Infrastruktur im Bereich der Freifläche installiert werden, wobei dann beim Zusammenfügen am Ort der Freifläche die einzelnen Elemente der Infrastruktur miteinander gekoppelt werden können.

Gemäß einer weiteren bevorzugten Ausführungsform kann das Bodensubstratelement eines oder mehrerer Module aus der Modulgruppe Trennwände aufweisen, um einen Wurzelkontakt der Pflanzen zu unterbinden.

Gemäß einer ersten bevorzugten Alternative wird bei dem erfindungsgemäßen Verfahren als Transportsystem ein Transportbehälter mit einer Bodenfläche und einer Seitenwandung verwendet, wobei die Abmessungen der Transportbehälter an die Bodensubstratelemente angepasst ist und wobei die Bodenfläche lösbar mit der Seitenwandung verbunden ist.

Hierdurch wird ermöglicht, dass beim Zusammenfügen der Transportbehälter zunächst eine Seitenwandung aufweist, die dann später beim Anordnen auf der Freifläche entfernt wird. Dabei bleibt es zunächst offen, ob die Bodenfläche zwischen Freifläche und Bodensubstratelement verbleibt.

Verbleibt die Bodenfläche am Ort der Freifläche, ist es bevorzugt, wenn die Bodenfläche aus einem leicht verrottbaren Material hergestellt ist. Hier kommen insbesondere biologisch abbaubare Kunststoffe, beispielsweise aus Polysacchariden oder aus Polyhydroxybuttersäure (PHB), in Frage.

Außerdem sind in bevorzugter Weise Stützmittel für die leicht verrottbare Bodenfläche vorgesehen.

Wenn die Bodenfläche nicht am Ort der Freifläche verbleiben soll, kann in einer alternativen Ausführungsform des erfindungsgemäßen Verfahrens derart vorgegangen werden, dass die lösbare Seitenwand des Transportbehälters entfernt wird und das Bodensubstratelement und der Transportbehälter derart gegeneinander verschoben werden, dass das Bodensubstratelement und die Oberfläche der Freifläche in unmittelbaren Kontakt kommen.

Schließlich kann, wenn in dieser Weise vorgegangen wird, zwischen dem Bodensubstratelement und der Bodenfläche des Transportbehälters als Gleithilfe Kies oder Granulat angeordnet werden.

Gemäß einer zweiten bevorzugten Alternative werden als Transportsystem korbartige Transportbehälter mit einer Bodenfläche und einer Seitenwandung eingesetzt, wobei auch hier deren Abmessungen an die Bodensubstratelemente angepasst sind. Bei dieser Alternative sind die Bodenfläche und die Seitenwandung jedoch beide aus einem leicht verrottbaren Material gebildet, insbesondere aus biologisch abbaubaren Kunststoffen, beispielsweise aus Polysacchariden oder aus Polyhydroxybuttersäure (PHB), sodass der gesamte korbartige Transportbehälter in der Freifläche verbleiben kann.

Im Folgenden wird die vorliegende Erfindung an Hand einer Zeichnung erläutert, wobei
- Fig. 1: ein erstes und ein zweites Modul aus einem Ausführungsbeispiel einer Modulgruppe zeigt,
- Fig. 2: ein drittes und ein viertes Modul aus dem Ausführungsbeispiel der Modulgruppe zeigt,
- Fig. 3: ein fünftes Modul aus dem Ausführungsbeispiel der Modulgruppe zeigt,
- Fig. 4: eine aus vier Modulen aus dem Ausführungsbeispiel der Modulgruppe gestaltete Freifläche zeigt,
- Fig. 5: ein erstes Ausführungsbeispiel eines Transportbehälters zeigt,
- Fig. 6: eine Anordnung aus einem Modul aus der Modulgruppe zusammen mit einem Transportbehälter mit entfernter Seitenwand zeigt und
- Fig. 7: ein zweites Ausführungsbeispiel eines Transportbehälters, der korbartig ausgebildet ist, zeigt.

Bei einem Ausführungsbeispiel des erfindungsgemäßen Verfahrens wird wie folgt vorgegangen. Um eine Freifläche zu gestalten, wird aus einer Modulgruppe mit einer Vielzahl von Modulen, bei denen festgelegt ist, welche Pflanzen und/oder Baustoff- und Dekorationselemente auf einem Bodensubstratelement in welcher Weise räumlich angeordnet sind, ausgewählt, welche dieser Module an welcher Stelle der Freifläche angeordnet werden sollen.

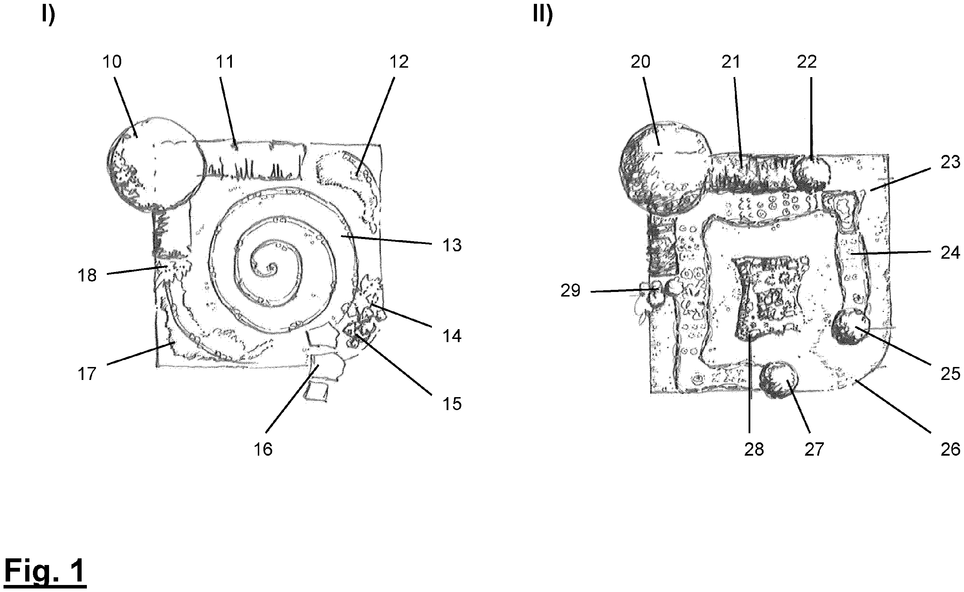

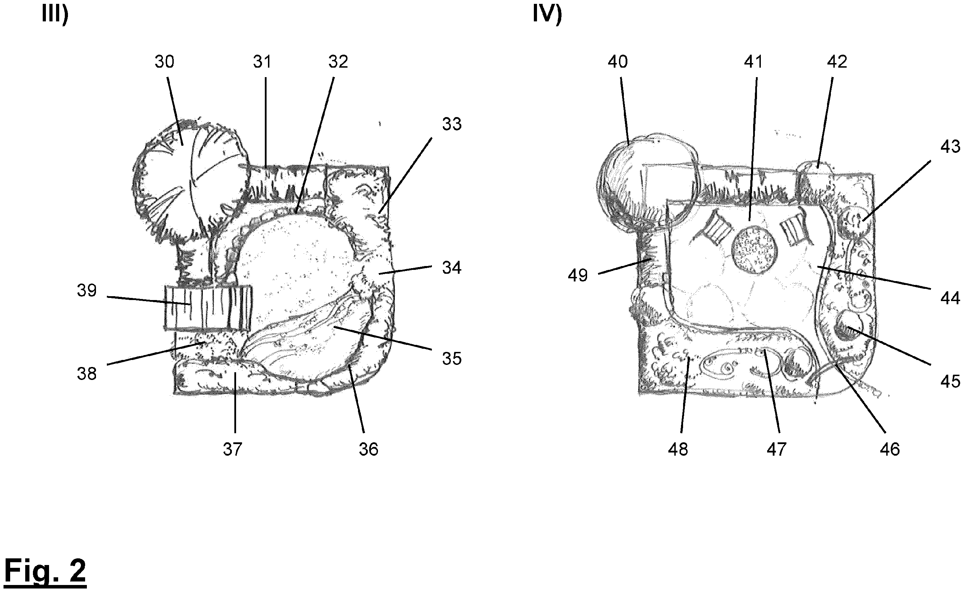

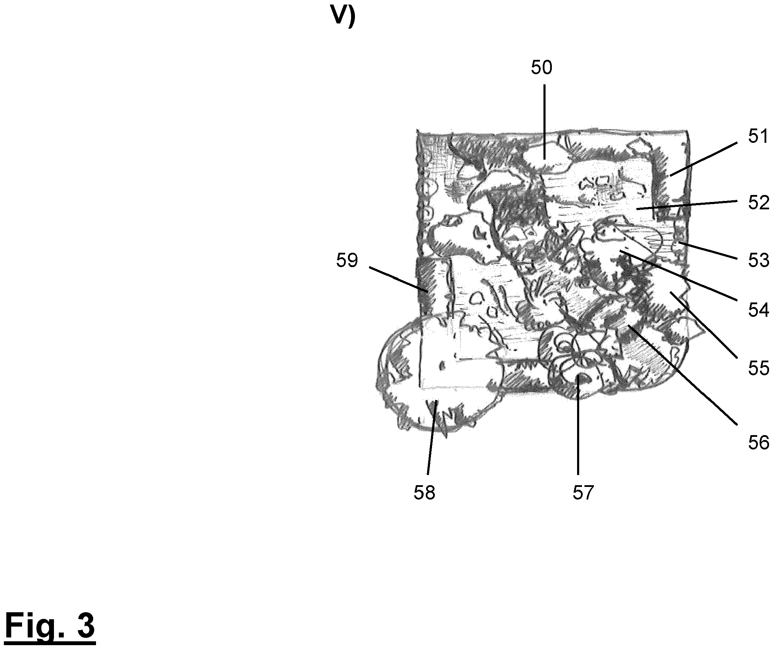

Beispielhaft kann die Modulgruppe die folgenden fünf Module I bis V enthalten, die in den Fig. 1 bis 3 dargestellt sind. Diese Module enthalten die folgenden Pflanzen und Baustoff-und Dekorationselemente:
- Modul I:: eine Felsenbirne 10, eine Hecke 11, Sternmoos 12 in Abgrenzung zum umgebenden Rasen, eine Spirale aus Granit 13 in einer Kiesfläche, eine Taglilie 14, eine Bonsai-Felsenbirne 15, amorphe Trittplatten 16 als Beispiel von Baustoff- und Dekorationselementen, wei- teres Sternmoos 17 und eine pfirsichfarbene Taglilie 18.
- Modul II:: einen Gewürzstrauch 20, eine Eibenhecke 21, eine Johannisbeerstrauch 22, Wege aus Lavasplit 23, Beete für Gemüse 24 (ggf. mit Einfassung aus Weidengeflecht), Stachelbeersträucher 25, 27, eine als Stahlschiene ausgebildete Einfassung 26, eine Kräuterspirale 28 (Guavensalbei, Zitronenthymian, Vanilie-Pestwurz) und Rhababer-Treibtöpfe 29.
- Modul III:: eine Kiefer 30, eine Hecke 31, eine Findlingsmauer 32, Heckenrosen 33, Gräser 34, eine Naturstein- bzw. Kieselfläche 35, einen Spiegel 36, Heckenrosen 37, weitere Gräser 38 und einen Holzsteg mit Stufen 39.
- Modul IV:: einen Kirschbaum 40, Mosaikstein- oder Scherbenfläche 41, einen Liebesperlenstrauch 42, Stauden (Tränendes Herz und Brennende Liebe) 43, eine Splittfläche in Wein-Rosé mit roten Keramikbändern 44, Buchsbaumkugeln 45, einen Rosenbogen 46, weitere rote Keramikbänder 47, Rosen, Wein (Rosa, Rot) 48 und eine Hecke (Eibe) 49.
- Modul V:: einen Kunstfelsen 50, eine Eibenhecke 51, eine Fläche mit Waldgräsern 52, Holzstämme 53 als Sichtschutz, einen Pfitzer-Wacholder 54, eine Kiefer 55, eine "Schlucht" 56 aus einem nach unten laufenden Mulchweg mit Findlingen und Holzstämmen, Farne 57, ein mehrstämmiger Ahorn 58 und eine Eibenhecke 59.

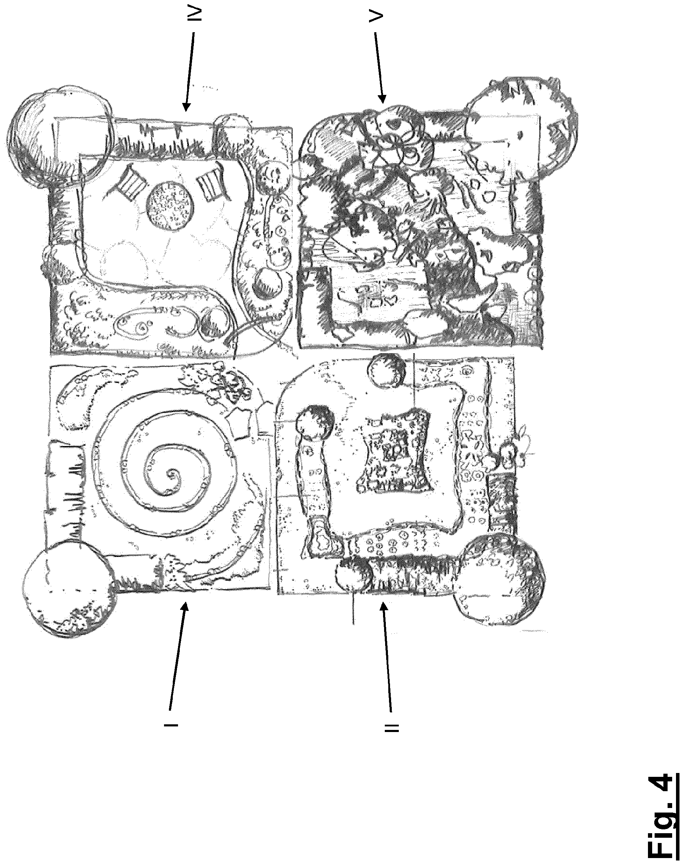

Aus dieser Gruppe von Modulen I bis V werden dann die Module ausgewählt, die auf der Freifläche in bestimmter Weise angeordnet werden sollen, wie dies in Fig. 4 dargestellt ist. Hierbei handelt es sich um die Modul I, II, IV und V.

Diese Module können zum Beispiel für die Dauer der von den Pflanzen benötigten Anwuchszeit schon vorgefertigt in einem Anzuchthaus lagern. Dabei ist es auch denkbar, die Module auf besonders platzsparende Art und Weise übereinander angeordnet zu lagern.

Alternativ werden die einzelnen ausgewählten Module erst nach der Auswahl zusammengefügt, wobei die entsprechenden Pflanzen und/oder Baustoff- und Dekorationselemente an der entsprechenden Stelle des Bodensubstratelements eingesetzt werden, so dass sich die vorgegebene räumliche Anordnung ergibt. Dabei ist es auch denkbar, dass vorgegebene Module, die bereits mit Pflanzen und/oder Baustoff- und Dekorationselementen versehen sind, wie z.B. bei einem der oben beschriebenen Modulen I bis V der Fall, um weitere, individuell auswählbare Pflanzen und/oder Baustoff- und Dekorationselemente ergänzt werden. Das Zusammenfügen erfolgt dabei entfernt von dem Ort, an dem die Freifläche ist, somit beispielsweise am Ort eines Gartenbaubetriebes.

Beim Zusammenfügen werden gleichzeitig Versorgungsmittel wie Wasser- und Stromleitungen in das Bodensubstratelement eingesetzt. Diese weisen Anschlusselemente an den Seitenflächen des Bodensubstratelements auf, so dass Versorgungsmittel benachbarter Module später miteinander verbunden werden können bzw. externe Versorgungsmittel wie z.B. Haushaltsstrom angeschlossen werden können.

Außerdem ist es denkbar, dass beim Zusammenfügen Trennwände in das Bodensubstratelement eines Moduls eingesetzt werden, um zu verhindern, dass Wurzeln benachbarter Pflanzen miteinander in Kontakt kommen oder damit angepasst auf die jeweiligen Pflanzen unterschiedliche Bodenzusammensetzungen verwendet werden können, die voneinander getrennt gehalten werden sollen, um eine Vermischung zu verhindern.

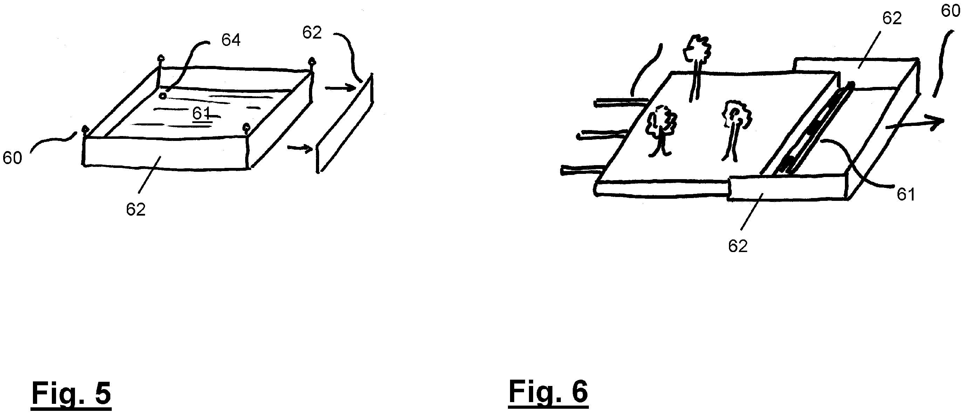

Das Bodensubstratelement wird dabei in einen Transportbehälter 60 eingesetzt, der eine Bodenfläche 61 aus leicht verrottbarem Material wie biologisch abbaubaren Kunststoffen, beispielsweise aus Polysacchariden oder Polyhydroxybuttersäure (PHB), sowie lösbare Seitenwände 62 aufweist (siehe Fig. 5 und 6). Schließlich kann in der Bodenfläche 61 des Transportbehälters 60 ein Abfluss 64 vorgesehen sein. Die Bodenfläche 61 kann alternativ auch ein schwer verrottbares Material aufweisen, um für bestimmte Einsätze, z.B. auf einer Terrasse, einen Kontakt des Bodensubstratelements mit der Freifläche nachhaltig zu unterbinden.

Bei dem hier beschriebenen bevorzugten Ausführungsbeispiel des erfindungsgemäßen Verfahrens werden beim Zusammenfügen bestimmte Einsatzplätze in dem Bodensubstratelement freigelassen.

Nach dem Zusammenfügen der Module werden die Module zu der Freifläche verbracht, und dort auf die vorgegebene Weise (Fig. 4) angeordnet. In die freigelassenen Einsatzplätze werden dabei zuvor ausgewählte Pflanzen und/oder Baustoff- und Dekorationselemente wie beispielsweise größere Bäume oder Teichelemente eingesetzt. Diese Pflanzen und/oder Baustoff- und Dekorationselemente, die erst auf der Freifläche mit den Modulen zusammengefügt werden, können auch bereits in Verbindung (z.B. in Wurzelverbindung) mit solchen Bodensubstratteilen, deren Form den freigelassenen Einsatzplätzen entspricht, an jenen freigelassenen Einsatzplätzen in die Module eingesetzt werden.

Beim Schritt des Anordnens der Module wird in bevorzugter Weise die lösbare Seitenwandung 62 der Transportbehälter 60 entfernt und das Bodensubstratelement und der Transportbehälter 60 werden gegeneinander verschoben, sodass das Bodensubstratelement und die Oberfläche der Freifläche in unmittelbaren Kontakt kommen. Dabei wird diese Bewegung der Bodenfläche 61 des Transportbehälters 60 dadurch erleichtert, dass beim Zusammenfügen bereits Kies oder Granulat als Gleithilfe auf der Bodenfläche 61 angeordnet werden.

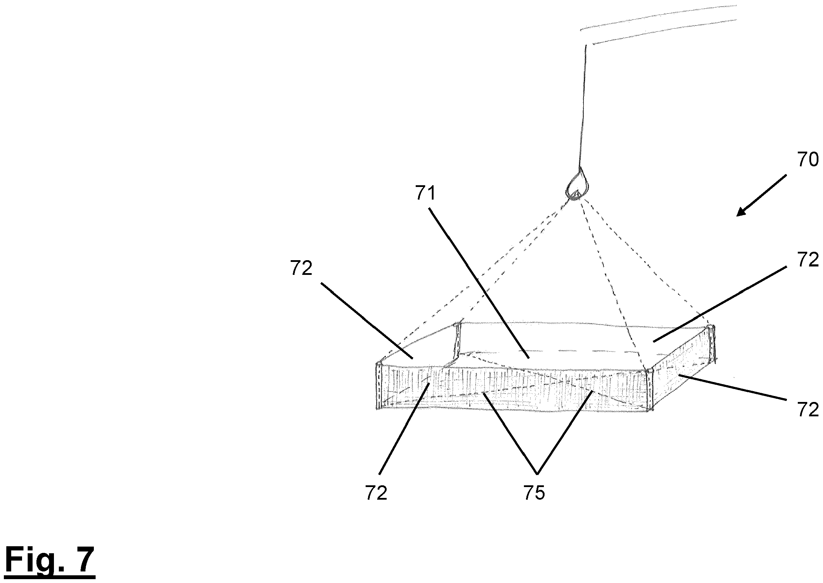

Wie in Fig. 7 gezeigt, kann der Transportbehälter 70 alternativ korbartig ausgebildet sein und eine Bodenfläche 71 sowie eine Seitenwandung 72 aufweisen, wobei auch hier die Abmessungen des Transportbehälters 70 an die der Bodensubstratelemente angepasst sind

In diesem Ausführungsbeispiel sind allerdings sowohl die Bodenfläche 71 als auch die Seitenwandung 72 des Transportbehälters aus einem leicht verrottbaren Material gebildet und vorzugsweise aus einem Geflecht davon. Insbesondere kann es sich hierbei um biologisch abbaubaren Kunststoffe, beispielsweise aus Polysacchariden oder aus Polyhydroxybuttersäure (PHB) handeln. Schließlich sind bei dem in Fig. 7 dargestellten Ausführungsbeispiel eines Transportbehälters 70 noch diagonal in der Bodenfläche 71 verlaufende Verstrebungen 75 vorgesehen, sodass die Bodenfläche 71 die zum Halten der Module erforderliche Stabilität aufweist.

Bei dem in Fig. 7 dargestellten Ausführungsbeispiel eines Transportbehälters 70 kann beim Anordnen der Module in der Freifläche in der Weise vorgegangen werden, dass der Transportbehälter 70 als Ganzes in der Freifläche eingesetzt wird und dann dort verbleiben kann und das jeweilige Modul nicht daraus entnommen werden muss, was den Vorgang des Anordnens der Module weiter vereinfacht.

Mit dem erfindungsgemäßen Verfahren zusammen mit dem Einsatz von Transportbehältern 60, 70 ist es möglich, die Gestaltung von Freiflächen massiv zu vereinfachen, wobei es hier nicht mehr erforderlich ist, komplizierte Pflanzvorgänge am Ort der Freifläche vorzunehmen, sondern dies kann bereits im Gartenbaubetrieb erfolgen. Des Weiteren wird durch die erfindungsgemäße Vorgehensweise die Planung sehr stark vereinfacht, da auf einen fest vorgegebenen Satz von Modulen zurückgegriffen wird, für den sämtliche Daten in Form von Stücklisten vorhanden sind.

Außerdem wird die Anwuchszeit der Pflanzen auf ein Minimum reduziert, bzw. in einen Zeitraum vor der Auslieferung bzw. Montage der Produkte verlegt. Auch die Ausfallquote von Pflanzen kann aufgrund des meist vor Auslieferung bzw. Montage der Pflanzen gewährleisteten Anwachsvorgangs auf ein Minimum reduziert werden.

## Patentansprüche

1. Verfahren zur modularen Gestaltung von Freiflächen, wobei die Freiflächen mit Pflanzen oder Baustoff- und Dekorationselementen bestückt werden, wobei das Verfahren die folgenden Schritte aufweist:
Auswählen eines oder mehrerer Module aus einer Modulgruppe,
wobei für jedes Modul aus der Modulgruppe festgelegt ist, welche Pflanzen und/oder Baustoff- und Dekorationselemente auf einem Bodensubstratelement in welcher Weise räumlich angeordnet sind;
Zusammenfügen der ausgewählten Module durch Zusammenfügen der Pflanzen und/oder Baustoff- und Dekorationselemente mit dem Bodensubstratelement gemäß der vorgegebenen räumlichen Anordnung und
Anordnen der zusammengefügten Module auf der Freifläche.

2. Verfahren nach Anspruch 1, wobei das Auswählen des Moduls oder der Module aus einer Modulgruppe mit Hilfe eines geeigneten Computerprogramms erfolgt,
wobei das Computerprogramm die Gestalt der aus Bodensubstratelementen und Pflanzen und/oder Baustoff- und Dekorationselemente zusammengefügten Module auf einer Anzeigevorrichtung darstellt.

3. Verfahren nach Anspruch 1 oder 2, wobei das Zusammenfügen der ausgewählten Module an einem Ort durchgeführt wird, der nicht identisch mit der Freifläche und nicht in unmittelbarer Nähe der Freifläche ist und
wobei die zusammengefügten Module mittels eines Transportsystems zu den Freiflächen verbracht werden.

4. Verfahren nach einem der vorhergehenden Ansprüche, wobei die Module aus der Modulgruppe freigehaltene Einsatzplätze in dem Bodensubstratelement aufweisen,
wobei eine Zusatzgruppe von Pflanzen und/oder Baustoff- und Dekorationselementen vorgesehen ist, die in ihrer Form den freigehaltenen Einsatzplätzen entsprechen,
wobei beim Schritt des Auswählens des oder der Module aus der Modulgruppe eines oder mehrere der Pflanzen und/oder Baustoff- und Dekorationselemente aus der Zusatzgruppe ausgewählt wird und
wobei beim Anordnen der Module in der Freifläche die ausgewählten Pflanzen und/oder Baustoff- und Dekorationselemente aus der Zusatzgruppe in die Einsatzplätze der Module entsprechend der Auswahl eingesetzt werden.

5. Verfahren nach einem der vorhergehenden Ansprüche, wobei die Module aus der Modulgruppe an vorgegebenen Positionen Versorgungsmittel, insbesondere Wasser- und Stromleitungen, mit Anschlusselementen an den Seitenflächen des Bodensubstratelements aufweisen, über die Versorgungsmittel weiterer Module oder externe Versorgungsmittel angeschlossen werden können, und
wobei während des Schrittes des Zusammenfügens die Versorgungsmittel in dem Bodensubstratelement der ausgewählten Module angeordnet werden.

6. Verfahren nach einem der vorhergehenden Ansprüche, wobei das Bodensubstratelement eines oder mehrerer Module aus der Modulgruppe Trennwände aufweist, um beispielsweise einen Wurzelkontakt der Pflanzen zu unterbinden.

7. Verfahren nach Anspruch 3, wobei das Transportsystem Transportbehälter (60) mit einer Bodenfläche (61) und einer Seitenwandung (62) umfasst, wobei die Abmessungen der Transportbehälter (60) an die Bodensubstratelemente angepasst sind und
wobei die Bodenfläche (61) lösbar mit der Seitenwandung (62) verbunden ist.

8. Verfahren nach Anspruch 7, wobei beim Schritt des Zusammenfügens das Bodensubstratelement und die Pflanzen und/oder Baustoff- und Dekorationselemente in den Transportbehälter (60) eingesetzt werden und
wobei beim Schritt des Anordnens die Seitenwandung (62) entfernt wird und die Bodenfläche (61) des Transportbehälters (60) in der Freifläche verbleibt.

9. Verfahren nach Anspruch 7 oder 8, wobei die Bodenfläche (61) des Transportbehälters (60) aus einem leicht verrottbaren Material gebildet ist, insbesondere aus biologisch abbaubaren Kunststoffen, beispielsweise aus Polysacchariden oder aus Polyhydroxybuttersäure (PHB).

10. Verfahren nach Anspruch 7, wobei beim Schritt des Anordnens die lösbare Seitenwandung (62) entfernt wird und
wobei das Bodensubstratelement und der Transportbehälter (60) gegeneinander verschoben werden, sodass das Bodensubstratelement und die Oberfläche der Freifläche in unmittelbaren Kontakt kommen.

11. Verfahren nach Anspruch 10, wobei beim Schritt des Zusammenfügens zwischen dem Bodensubstratelement und der Bodenfläche (61) des Transportbehälters (60) und/oder der Seitenwand als Gleithilfe Kies oder Granulat angeordnet wird.

12. Verfahren nach Anspruch 3, wobei das Transportsystem Transportbehälter (70) mit einer Bodenfläche (71) und einer Seitenwandung (72) umfasst, wobei die Abmessungen der Transportbehälter (70) an die Bodensubstratelemente angepasst sind und
wobei die Bodenfläche (71) und die Seitenwandung (72) aus einem leicht verrottbaren Material gebildet sind, insbesondere aus biologisch abbaubaren Kunststoffen, beispielsweise aus Polysacchariden oder aus Polyhydroxybuttersäure (PHB).
